# EUROPEAN PATENT APPLICATION

(11) **EP 1 811 760 A1**
(43) Date of publication of application: **25.07.2007**
(21) Application number: 05806214.2
(22) Date of filing: 10.11.2005
(51) Int. Cl.: H04M 11/00, H04M 1/00

(54) **MOBILE TELEPHONE AND FILE SHARING METHOD THEREOF**

(30) Priority: 12.11.2004 JP 2004328844
(71) Applicant: MATSUSHITA ELECTRIC INDUSTRIAL CO., LTD., Osaka 571-8501 (JP)
(72) Inventor: HOTTA, Yukihiko., Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/020609
(87) International publication number: WO 2006/051858

(57) **Abstract**

The present invention aims at providing a cellular telephone apparatus capable of enhancing usefulness of file-sharing, as well as a file sharing method for use with the cellular telephone apparatus.

When a file sharing request is issued, a communications control section 14 prepares a short message including a cellular telephone apparatus's own IP address, and transmits the short message by use of a short message service. Further, upon receipt of a file sharing request sent by means of the short message service, a telephone number of a sender is extracted. Further, a telephone directory application 20 is launched, to thus determine whether or not the extracted telephone number coincides with the telephone number registered in a telephone directory database 22. If the telephone number is stored, a display section 26 displays an inquiry as to whether or not file-sharing is allowed, while taking a name stored in the telephone directory database 22 associated with the extracted telephone number as a sender of the file sharing request.

## Description

### TECHNICAL FIELD

The present invention relates to a cellular telephone apparatus and a file sharing method therefor.

### BACKGROUND ART

A hitherto known system combines cellular telephone apparatuses together by means of a communications network and shares an information file of a specific cellular telephone apparatus with another cellular telephone apparatus. A disclosed portable communications terminal apparatus enables sharing of a storage area among apparatuses through use of wireless communications means without dependence on the shape of the apparatus, corresponding interface standards, and the number of interfaces (see, e.g., Patent Document 1). There are also available a network system and a wireless terminal, which can effect a multi-access function among a plurality of terminals and can exchange data among the terminals (see, e.g., Patent Document 2).
Patent Document 1: JP-A-2004-72400
Patent Document 2: JP-A-2004-15524

### DISCLOSURE OF THE INVENTION

### PROBLEM TO BE SOLVED BY THE INVENTION

Incidentally, a person who uses a cellular telephone apparatus, which is connected to a communications network and enables sharing of files, rarely considers sharing files with all people. In many cases, files are shared with only specific communication partners such as friends or coworkers.

However, in the related art, a method for enabling or disabling issuance of a control command solely to a specific terminal has not been disclosed, and the user encounters difficulty in sharing files with only a desired specific terminal.

The present invention has been conceived in light of the circumstances of the related art and aims at providing a cellular telephone apparatus capable of enhancing usefulness of file sharing, as well as a file sharing method for use with the cellular telephone apparatus.

### MEANS FOR SOLVING THE PROBLEM

A cellular telephone apparatus of the present invention comprises receiving means for receiving a file sharing request transmitted by use of a short message service; telephone number extraction means for extracting a telephone number of a sender from the received file sharing request; and display means for displaying an indication of whether file sharing is allowed or disallowed by taking the extracted telephone number as a sender which has transmitted the file sharing request.

According to this configuration, the party with which files are shared can be specified by means of a telephone number. Further, every time the file sharing request is received, a determination can be made as to whether or not file-sharing is allowed. Accordingly, the usefulness of file-sharing with a specific party can be enhanced.

The cellular telephone apparatus of the present invention further comprises telephone directory storage means for storing telephone numbers and names in an associated manner; and sender information acquisition means which, when a telephone number coinciding with the telephone number extracted by the telephone number extraction means is available by reference to the telephone directory storage means, reads a name assigned to the extracted telephone number. The display means displays the thus-read name as the sender of the file sharing request.

According to this configuration, the party with which files are shared can be specified by means of the name of a previously-registered party. Accordingly, the usefulness of file-sharing with a specific party can be enhanced.

A cellular telephone apparatus of the present invention comprises receiving means for receiving a file sharing request transmitted by use of a short message service; telephone number extraction means for extracting a telephone number of a sender from the received file sharing request; file-sharing allowing storage means for storing telephone numbers of parties being allowed to share files; and file-sharing allowing determination means which allows the sender of the file sharing request to share files when a telephone number of the sender of the extracted file sharing request coincides with the stored telephone number retrieved by reference to the file-sharing allowing storage means, and which does not allow the sender of the file sharing request to share files when no coincidence exists.

According to this configuration, the party with which files are shared can be specified by means of a telephone number. Further, when the file sharing request is received, a determination is automatically made as to whether or not the file-sharing is allowed. Accordingly, the usefulness of file-sharing with a specific party can be enhanced.

A cellular telephone apparatus of the present invention comprises file request destination instruction means for instructing preparation of a request for a file by means of specifying a cellular telephone apparatus which is to become a file request destination; short message generation means for generating a message using a short message service; and transmission means for transmitting the thus-generated short message, wherein, when preparation of a request for a file is instructed by the file request instruction means, the short message preparation means prepares a short message, including a cellular telephone apparatus's own IP address, as a file sharing request with respect to the telephone number of the specified cellular telephone apparatus of the request destination.

According to this configuration, the party with which files are shared can be specified by means of a telephone number. Accordingly, the usefulness of file-sharing with a specific party can be enhanced.

A file sharing method for a cellular telephone apparatus of the present invention comprises the steps of receiving a file sharing request transmitted by use of a short message service; extracting a telephone number of a sender from the received file sharing request; and displaying an indication of whether file-sharing is allowed or disallowed by taking the extracted telephone number as a sender which has transmitted the file sharing request.

According to this method, the party with which files are shared can be specified by means of a telephone number. Further, every time the file sharing request is received, a determination can be made as to whether or not file-sharing is allowed. Accordingly, the usefulness of file-sharing with a specific party can be enhanced.

The file sharing method for a cellular telephone apparatus of the present invention further comprises a step of reading a name assigned to the coinciding telephone number in telephone directory storage means when a telephone number coinciding with the extracted telephone number is present and has been registered in advance in the telephone directory storage means, wherein the read name is displayed as the sender of the file sharing request.

According to this method, the party with which files are shared can be specified by means of the name of a previously-registered party. Accordingly, the usefulness of file-sharing with a specific party can be enhanced.

A file sharing method for a cellular telephone apparatus of the present invention comprises the steps of receiving a file sharing request which has been transmitted by use of a short message service; extracting a telephone number of a sender from the received file sharing request; and enabling the sender of the file sharing request to share files when a telephone number of the sender of the extracted file sharing request coincides with a telephone number of a previously-stored party which is allowed to share files, and disabling the sender of the file sharing request to perform file-sharing when no coincidence exists.

According to this method, the party with which files are shared can be specified by means of a telephone number. Further, when the file sharing request is received, a determination is automatically made as to whether or not file-sharing is allowed. Accordingly, the usefulness of file-sharing with a specific party can be enhanced.

A file sharing method for a cellular telephone apparatus of the present invention comprises the steps of acquiring a cellular telephone apparatus's own IP address when preparation of a file request specifying a cellular telephone apparatus, to which a file request is to be sent, has been instructed; generating a short message, which includes the acquired telephone apparatus's own IP address and uses a short message service, while taking as a destination the specified cellular telephone apparatus to which a file request is to be sent; and transmitting the generated short message as a file request.

According to this method, the party with which files are shared can be specified by means of the telephone number. Accordingly, the usefulness of file-sharing with a specific party can be enhanced.

### ADVANTAGE OF THE INVENTION

According to the present invention, there can be provided a cellular telephone apparatus capable of enhancing the usefulness of file-sharing and a file sharing method therefor.

### BRIEF DESCRIPTION OF THE DRAWINGS

[Fig. 1] A view showing the schematic configuration of a cellular telephone apparatus according to a first embodiment of the present invention.
[Fig. 2] A view showing an example information display screen of a file sharing request transmitted from the cellular telephone apparatus.
[Fig. 3] A view showing an example information display screen when the file sharing request has been received.
[Fig. 4] A view showing another example information display screen when the file sharing request has been received.
[Fig. 5] A view showing an example dialogue display screen when file sharing request reject information has been received. [Fig. 6] A view showing a file sharing method for the cellular telephone apparatus according to the first embodiment of the present invention.
[Fig. 7] A view showing a file sharing method for the cellular telephone apparatus according to a second embodiment of the present invention.

### DESCRIPTIONS OF THE REFERENCE NUMERALS

- 10: Communications antenna
- 14: Communications control section
- 16: File sharing protocol section
- 18: File system
- 20: Telephone directory application
- 22: Telephone directory database
- 24: File operation application
- 26: Display section
- 28: Operation section

### BEST MODES FOR IMPLEMENTING THE INVENTION

### (First Embodiment)

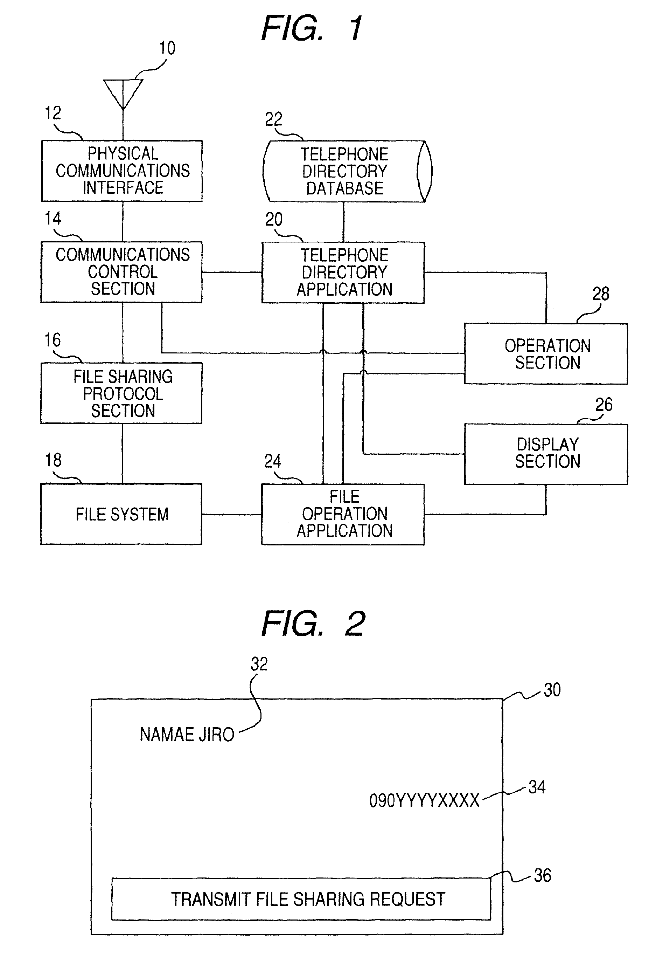

Fig. 1 is a view showing a schematic configuration of a cellular telephone apparatus according to a first embodiment of the present invention. As shown in Fig. 1, a cellular telephone apparatus of the embodiment of the present invention comprises a communications antenna 10; a physical communications interface 12; a communications control section 14; a file sharing protocol section 16; a file system 18; a telephone directory application 20; a telephone directory database 22; a file operation application 24; a display section 26; and an operation section 28.

The communications antenna 10 performs information communication with an apparatus in an unillustrated base station by utilization of radio waves. The physical communications interface 12 executes communication processing, such as modulation and demodulation complying with the wireless communications scheme, by way of the communications antenna 10. The communication control section 14 controls communication which is carried out by way of the physical communications interface 12.

In sharing a file with another cellular telephone apparatus, the file sharing protocol section 16 allows sharing of the file system 18 and controls reading and writing operations. Files to be shared or the like are hierarchically managed in the file system 18.

The telephone directory application 20 manages the telephone directory information by means of which telephone numbers and designations are managed while being associated with each other. The telephone directory database 22 stores telephone numbers and designations in an associated manner.

The file operation application 24 is for operating files of the file system 18. The display section 26 performs displaying operation of a cellular telephone apparatus. The operation section 28 has, e.g., a ten-key numerical pad and other function keys, and accepts an operation input for implementing respective functions of the cellular telephone apparatus.

For instance, in the present embodiment a network file system (hereinafter abbreviated as "NFS"), which distributes files byway of a TCP/IP (Transmission Control Protocol/Internet Protocol) protocol stack and a communications network, is used for sharing files with another device.

The overview of the file sharing method of the present invention will now be described. For instance, when a cellular telephone apparatus B requests sharing of a file managed by the file system 18 of the other cellular telephone apparatus A, the cellular telephone apparatus B requests sharing of files by utilization of a short message service (hereinafter called an "SMS"). Thus, the cellular telephone apparatus A that allows sharing of files identifies the cellular telephone apparatus which requests file-sharing, by means of a telephone number rather than an IP (Internet Protocol) address. Further, a telephone number, a user name, or the like of a cellular telephone apparatus are stored before hand in the telephone director database 22, whereby the cellular telephone apparatus that allows sharing of files is identified by means of the user name assigned to the telephone number.

A determination as to a file sharing request is made such that a determination as to whether or not files are shared is made every time a file sharing request is received rather than a determination being unilaterally made as to whether or not the file sharing request is allowed in relation to a certain cellular telephone apparatus on the basis of a fixed criterion. Consequently, the file sharing request can be allowed or disallowed in relation to only a specific cellular telephone apparatus rather than in relation to all cellular telephone apparatuses. Moreover, the cellular telephone apparatus that is allowed to share files is not simultaneously limited to one cellular telephone apparatus, but a plurality of cellular telephone apparatuses can also be allowed to share files.

Fig. 2 shows an example information display screen of a file sharing request transmitted from the cellular telephone apparatus. A user of a cellular telephone apparatus having a file system which allows other persons to share files rarely considers sharing files, which are managed by the user, with all people. There are many cases where the user desires sharing of files with only cellular telephone apparatuses of specific communication partners such as friends, coworkers, and the like.

This embodiment is directed to a case where, in order to allow another cellular telephone apparatus B to share information files stored in the file system of a certain cellular telephone apparatus A and to effect browsing, editing, and the like, of the files, a request for sharing information files is issued from the cellular telephone apparatus B, which is a home terminal whose owner's name is, e.g., "Namae Taro" and a telephone number "090XXXXYYYY," to the cellular telephone apparatus A, which is an intended terminal whose owner's name is e.g., "Namae Jiro" and a telephone number "090YYYYXXXX"; and a file sharing request screen 30 is displayed.

The file sharing request screen 30 displayed by the display section 26 of the cellular telephone apparatus that has received the file sharing request includes an owner' s name 32, a telephone number 34, a message 36, and the like, of the cellular telephone apparatus of the intended terminal. In this embodiment, an individual name; e.g., "Namae Jiro," is used as the name 32 of the owner of the intended terminal. An identification character string of the telephone number, e.g., "090YYYYXXXX," is used for the telephone number 34. An expression showing specifics; e.g., "Transmit a file sharing request" and the like, appears as the message information 36.

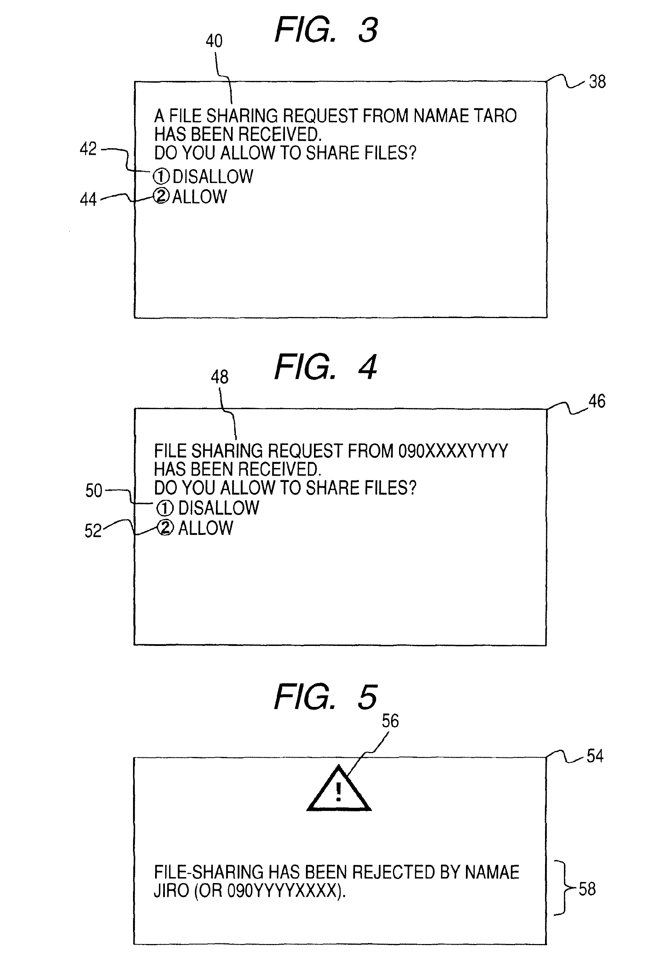

Fig. 3 is an example information display screen appearing when the cellular telephone apparatus has received the file sharing request. The cellular telephone apparatus having received the file sharing request signal retrieves a telephone number registered in the telephone directory database; determines whether or not a telephone number of the cellular telephone apparatus of the sender is registered in the telephone directory database. If the telephone number has already been registered, a sender name display screen 38 is displayed.

Message information 40, disallowing selection information 42, allowing selection information 44, and the like, which are displayed by the display section 26, appear on the sender name display screen 38 of the cellular telephone apparatus that has received the file sharing request. For instance, "(1) DISALLOW" is displayed on the disallowing selection information 42, and "(2) ALLOW" is displayed on the allowing selection information 44. The owner's name of a cellular telephone apparatus of the intended terminal; e. g. , an expression showing a received message including "Namae Taro; i.e. , "A file sharing request has been received from Namae Taro. Do you allow to share files?" appears as the message information 40.

The cellular telephone apparatus having received the file sharing request receives a message of SMS from the cellular telephone apparatus having issued the file sharing request, to thereby determine whether or not the file sharing request is allowed. At that time, when the telephone number of the cellular telephone apparatus has not been registered in advance in the telephone directory database 22, the disallowing selection information 42 or the allowing selection information 44 pertaining to the cellular telephone apparatus is selected in order to forcefully ignore the request or allow the request. If the file sharing request is issued by the cellular telephone apparatus of the telephone number previously registered in the telephone directory database 22, Allow or Disallow is selectively displayed by use of a dialogue display every time the file sharing request is received.

Fig. 4 shows another information display screen when the cellular telephone apparatus has received a file sharing request. The cellular telephone apparatus having received the file sharing request signal retrieves a telephone number registered in the telephone directory database; determines whether or not the telephone number of the sender of the cellular telephone apparatus thereof is registered in the telephone directory database; and displays a sender telephone number display screen 46 if the telephone number is not registered.

The sender telephone number display screen 46 includes message information 48, disallowing selection information 50, allowing selection information 52, and the like, all of which are displayed by the display section 26. The message information 48 is displayed in the form of a telephone number of a cellular telephone apparatus having issued a file sharing request; e.g., an expression showing a received message including "090XXXXYYYY" or "A file sharing request has been received from 090XXXXYYYY. Do you allow to share files?" or the like.

For instance, "(1) DISALLOW" is displayed as the disallowing selection information 50, and "(2) ALLOW" is displayed as the allowing selection information 52. Any selection information; namely, the disallowing selection information 50 or the allowing selection information 52, is used for file sharing allowing selection processing of the cellular telephone apparatus as will be described later.

Fig. 5 shows an example dialogue display screen acquired when the cellular telephone apparatus has received file sharing request reject information. When information showing rejection of a file sharing request has been received from the cellular telephone apparatus that determines enabling of file-sharing, the display section 26 of the cellular telephone apparatus that has issued a file sharing request displays a dialogue display screen 54. The dialogue display screen 54 displays a reject mark 56 symbolizing reject information, message information 58, or the like. The message information 58 specifies the name of an owner of an intended terminal; e. g. , "Namae Jiro," a telephone number "090YYYYXXXX," and the like. For instance, a dialogue display, such as "File-sharing is rejected by Namae Jiro (or 090YYYYXXXX)" is displayed.

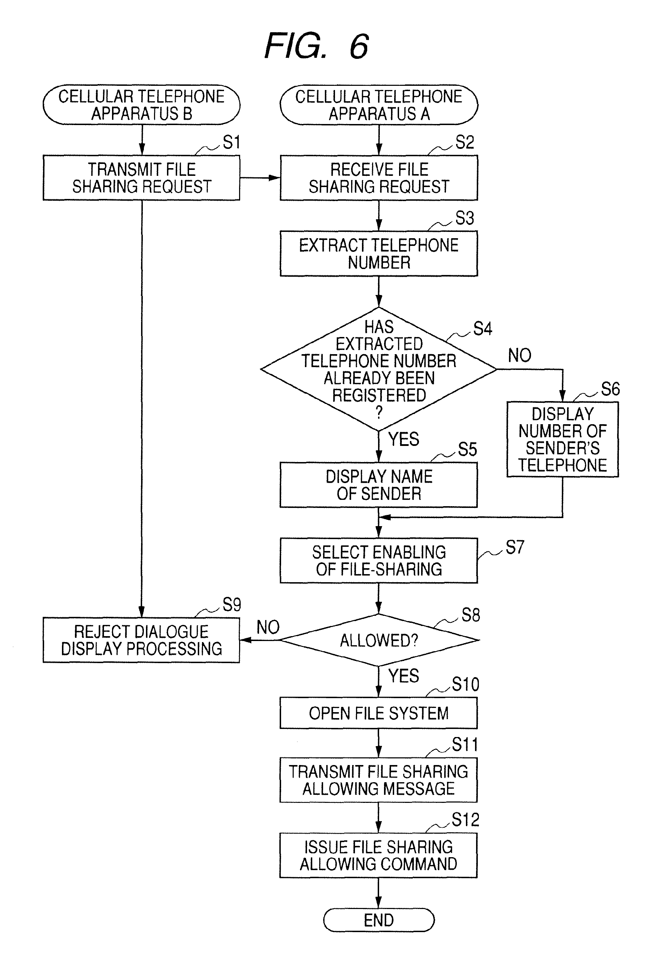

Fig. 6 is a view showing a method for sharing files of the cellular telephone apparatus according to the first embodiment of the present invention. A description is provided by means of taking, as an example, a case where the cellular telephone apparatus B issues a file sharing request to the cellular telephone apparatus A and each of the cellular telephone apparatuses A and B has the configuration shown in Fig. 1.

First, when the cellular telephone apparatus B issues a file sharing request to the cellular telephone apparatus A, the user of the cellular telephone apparatus B operates the operation section 28 to thus specify an address which is a destination of the file sharing request. After the display screen of the file-sharing screen 30 such as that shown in, e.g., Fig. 2 has been displayed, a file sharing request is transmitted (step S1). The destination may be specified by means of inputting a telephone number directly from the operation section 28. Alternatively, the telephone directory application 20 is launched to thus retrieve the destination from the names or the like stored in the telephone directory database 22, and the thus-retrieved name may be specified. When commanded by the operation section 28 to transmit a file sharing request, the communications control section 14 prepares a short message, including an IP address of the cellular telephone apparatus B, with respect to the cellular telephone apparatus A and transmits the thus-prepared short message to the cellular telephone apparatus A by use of SMS and by way of the physical communications interface 12 and the antenna 10, thereby issuing the sharing request to the file system of the cellular telephone apparatus A.

Next, in the cellular telephone apparatus A, upon receipt of the file sharing request by way of the antenna 10 and the physical communications interface 12 (step S2), the communications control section 14 performs processing for extracting a telephone number of the cellular telephone apparatus B, which becomes a sender, from the short message of the file sharing request; launches the telephone directory application 20 to thus refer to the telephone directory database 22; and makes a retrieval as to whether or not the extracted telephone number is registered in the telephone directory database 22 (step S3).

If the telephone number of the cellular telephone apparatus B, which becomes the sender, is registered in the telephone directory database 22 (YES in step S4), the name assigned to the extracted telephone number is read on the display section 26, and the call-originator name display screen 38, including the name of the sender, is displayed (step S5). Meanwhile, if the call-originator telephone number of the cellular telephone apparatus B is not registered in the telephone directory database 22 (NO in step S4), the sender telephone number display screen 46, including the telephone number of the sender, e.g., "090XXXXYYYY," is displayed on the display screen 26 (step S6).

The user of the cellular telephone apparatus A operates the operation section 28 on the display of the display section 26, to thus determine whether or not file-sharing is performed, through selection (step S7).

If selection of "(1) DISALLOW" is input by means of the operation section 28 (NO in step S8), the communications control section 14 transmits to the cellular telephone apparatus B information which disallows file-sharing. Upon receipt of the disallowing information, the communications control section 14 of the cellular telephone apparatus B causes the display section 26 to display a reject dialogue (step S9).

In the meantime, if selection of "(2) ALLOW" is input by means of the operation section 28 (YES in step S8), for example, file system open processing by an issuance of an NFS command of Linux is performed, and a file system is opened in response to the IP address of the cellular telephone apparatus B of the sender, included in the file sharing request message (step S10) . At this time, the file sharing protocol section 16 of the cellular telephone apparatus A issues a command used for opening a predetermined directory for sharing purpose, and allows the cellular telephone apparatus B to share files.

Next, the communications control section 14 returns a message, which allows file-sharing, to the cellular telephone apparatus B that has transmitted the file sharing request (step S11). At that time, the IP address of the terminal of the sender is included in the message.

Next, in order to allow a personal computer to ascertain peripheral equipment, such as a disk drive, and to be able to operate the peripheral equipment, the file sharing protocol section 16 of the cellular telephone apparatus B issues to the IP address included in the return message a file system sharing command of a mount for the case of, e.g., NFS of Linux (step S12) . Consequently, the cellular telephone apparatus B issues a command for mounting the file system of the cellular telephone apparatus A, thereby enabling the cellular telephone apparatus B to browse and edit the files of the cellular telephone apparatus A.

According to the first embodiment of such an invention, the user can readily perform determination operation for enabling or disabling the file sharing request from the cellular telephone apparatus without becoming aware of mechanical operation of a keyboard or a mouse and without special computer literacy, such as knowing an IP address used for processing an input of characters or data.

### (Second Embodiment)

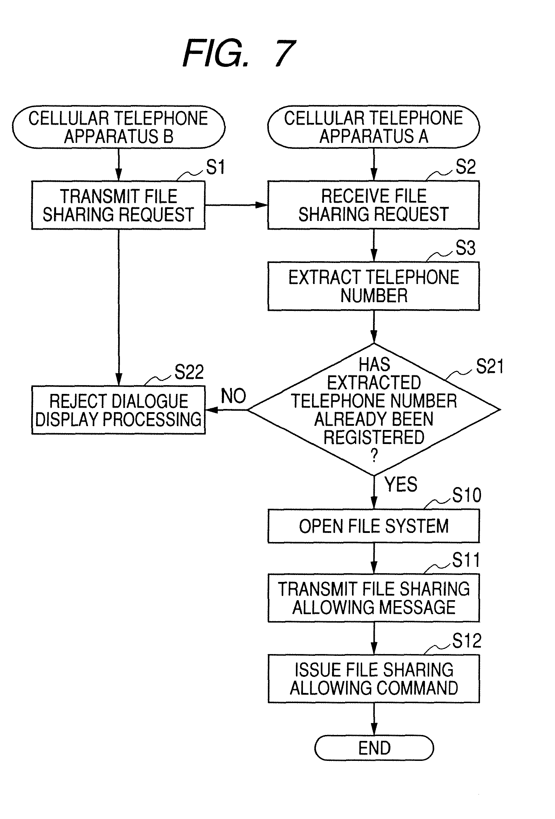

Fig. 7 is a view showing a method for sharing files of a cellular telephone apparatus according to a second embodiment of the present invention. In Fig. 7, operations overlapping those shown in Fig. 6, which have been described in connection with the first embodiment, are assigned the same reference numbers. The cellular telephone apparatus of the second embodiment of the present invention assumes the configuration shown in Fig. 1.

As shown in Fig. 7, the cellular telephone apparatus A receives a file sharing request; extracts a telephone number thereof; and determines whether or not the extracted telephone number is registered as being share-allowed(step S21). In relation to share-enabling registration, the user of the cellular telephone apparatus A registers parties, which are allowed to share files, in advance in the telephone directory database 22. Upon receipt of the file sharing request, the communications control section 14 launches the telephone directory application 20, and determines whether or not the telephone number of the sender who has transmitted the received file sharing request is registered as being share-allowed.

If the sender who has transmitted the file sharing request is not registered as being share-allowed (NO in step S21), the communications control section 14 transmits to the cellular telephone apparatus B information which disallows file-sharing. Upon receipt of the disallowing information, the communications control section 14 of the cellular telephone apparatus B causes the display section 26 to display a rejection dialogue (step S22). If the sender who has transmitted the file sharing request is registered as being share-allowed (NO in step S21), processing proceeds to step S10, where file sharing operation is performed.

According to such a second embodiment of the present invention, a party who shares files can be specified by means of a telephone number. When a file sharing request has been received, sharing of files is automatically allowed or disallowed, as appropriate. Thus, usefulness of file-sharing with respect to specific parties can be enhanced.

The present invention has been described in detail by reference to specific embodiments. However, it is evident to persons skilled in the art that the present invention is liable to various alterations or modifications without departing from the spirit and scope of the present invention.

The present invention claims priority to Japanese Patent Application (JP-A-2004-328844) filed on November 12, 2004, which is incorporated herein by reference in its entirety.

### INDUSTRIAL APPLICABILITY

A method for sharing files of the present invention yields an advantage of being able to enhance the usefulness of file-sharing, and is useful for a cellular telephone apparatus, or the like.

## Claims

1. A cellular telephone apparatus comprising:
receiving means for receiving a file sharing request transmitted by use of a short message service;
telephone number extraction means for extracting a telephone number of a sender from the received file sharing request; and
display means for displaying an indication of whether file sharing is allowed or disallowed by taking the extracted telephone number as a sender which has transmitted the file sharing request.

2. The cellular telephone apparatus according to claim 1, further comprising:
telephone directory storage means for storing telephone numbers and names in an associated manner; and
sender information acquisition means which, when a telephone number coinciding with the telephone number extracted by the telephone number extraction means is available by reference to the telephone directory storage means, reads a name assigned to the extracted telephone number,
wherein the display means displays the read name as a sender of the file sharing request.

3. A cellular telephone apparatus comprising:
receiving means for receiving a file sharing request transmitted by use of a short message service;
telephone number extraction means for extracting a telephone number of a sender from the received file sharing request;
file sharing allowing storage means for storing telephone number of parties being allowed to share files; and
file sharing allowing determination means which allows the sender of the file sharing request to share files when a telephone number of a sender of the extracted file sharing request coincides with the stored telephone number acquired by reference to the file sharing allowing storage means, and which disallows sharing of files with the sender of the file sharing request when no coincidence exists.

4. A cellular telephone apparatus comprising:
file request destination instruction means for instructing preparation of a request for a file by means of specifying a cellular telephone apparatus which is to become a file request destination;
short message generation means for generating a message using a short message service; and
transmission means for transmitting the thus-generated short message,
wherein, when preparation of a request for a file is instructed by the file request instruction means, the short message preparation means prepares a short message including a cellular telephone apparatus' s own IP address as a file sharing request with respect to a cellular telephone number of the specified cellular telephone apparatus of the request destination.

5. A file sharing enabling method for a cellular telephone apparatus comprising the steps of:
receiving a file sharing request transmitted by use of a short message service;
extracting a telephone number of a sender from the received file sharing request; and
displaying an indication of whether file-sharing is allowed or disallowed by taking the extracted telephone number as a sender which has transmitted the file sharing request.

6. The file sharing enabling method according to claim 5, further comprising:
a step of reading a name assigned to the coinciding telephone number in telephone directory storage means when a telephone number coinciding with the extracted telephone number is present and has been registered in advance in the telephone directory storage means,
wherein the read name is displayed as the sender of the file sharing request.

7. A file sharing method for a cellular telephone apparatus comprising the steps of:
receiving a file sharing request which has been transmitted by use of a short message service;
extracting a telephone number of a sender from the received file sharing request; and
enabling the sender of the file sharing request to share files when a telephone number of the sender of the extracted file sharing request coincides with a telephone number of a previously-stored party which is allowed to share files, and disabling the sender of the file sharing request to perform file-sharing when no coincidence exists.

8. A file sharing method for a cellular telephone number comprising the steps of:
acquiring a cellular telephone apparatus' s own IP address when preparation of a file request specifying a cellular telephone apparatus, to which a file request is to be sent, has been instructed;
generating a short message, which includes the acquired IP address and uses a short message service, while taking as a destination the specified cellular telephone apparatus to which a file request is to be sent; and
transmitting the generated short message as a file request.
